Europäisches Patentamt

European Patent Office

Office européen des brevets

(11) Publication number: **0 022 379**
A1

# EUROPEAN PATENT APPLICATION

(21) Application number: **80400571.8**

(22) Date of filing: **25.04.80**

(51) Int. Cl.³: **H 02 K 3/493**
**H 02 K 21/12**

(30) Priority: **05.07.79 US 54761**

(43) Date of publication of application:
**14.01.81 Bulletin 81/2**

(84) Designated Contracting States:
**DE FR GB IT**

(71) Applicant: **THE BENDIX CORPORATION**
**Executive Offices Bendix Center**
**Southfield, Michigan 48037(US)**

(72) Inventor: **Peterson, Arnold Duane**
**55 West Main Street**
**Bainbridge New York 13733(US)**

(74) Representative: **Maguet, André et al,**
**Service Brevets Bendix 44, Rue François 1er**
**F-75008 Paris(FR)**

(54) Permanent magnet generator.

(57) Permanent magnet generator that minimizes the effect that temperature would otherwise have on the output current when the generator is operating under a heavy current load, the stator (1) of the permanent magnet generator including a strip (4) of ferromagnetic material comprised of a nickel iron alloy located between adjacent teeth (3) of the stator (1) and having a nickel content of 29.5% to 39%.

FIG. 2

EP 0 022 379 A1

## Permanent magnet generator

The present invention relates to a permanent magnet generator of the type having a permanent magnet rotor, a stator having a plurality of teeth and slots between adjacent teeth, and at least one winding having electrical conductors passing through slots.

It is well known in the rotating electrical machinery art that magnetic strips or shims may be used in the slots between adjacent teeth to increase the winding's inductive reactance by increasing the leakage of magnetic flux between adjacent teeth. Examples of the use of magnetic strips in the form of sheet steel in conjunction with an induction motor winding and in a permanent magnet generator winding can be found in U.S. Patent 2,640,956 and U.S. Patent 4,025,840, respectively. The effect of a piece of sheet steel between adjacent teeth is the same for the winding of an induction motor or a permanent magnet generator, i.e., the winding inductive reactance is increased. The output current from the winding is then a function of the total circuit reactance which includes the windings inductive reactance and the reactance of any external circuit to which it is connected.

In certain applications, permanent magnet generators may be operated under heavy current loads. For example, in some jet engine control system power supplies, permanent magnet generators are operated under loads that nearly equal their short circuit currents over a wide speed range. In such applications, a major contributor to output current variation is the variation in the temperature of the generator during operation. For example, in a typical application the operating temperature of a permanent magnet generator can vary from -54°C to 232°C. When this occurs, the current output of the permanent magnet generator decreases with increasing temperature due to a decrease of the air gap flux of the generator. This is caused by a decrease in the level of magnetic induction of the rotor because of the reversable temperature coefficient of the magnet material employed in the rotor.

Accordingly, one ever present problem with permanent magnet  generators operating as a current source is the variation in current output with an increase in operating temperature.

The present invention overcomes the disadvantages and limitations of the prior art permanent magnet generators by providing a permanent magnet generator of the type having a permanent magnet rotor, a stator having a plurality of teeth and slots between adjacent teeth, and at least one winding having electrical conductors passing through slots, in which there is provided means for reducing the reactance of the winding as temperature increases over the operating temperature range of the generator.

The permanent magnet generator of the present invention has the advantage to reduce the effect of temperature on the current output thereof when operating under a heavy current load.

One way of carrying out the invention is described in detail below with reference to the drawings which illustrate one specific embodiment, in which:

FIGURE 1 illustrates the effect of temperature on current of prior art permanent magnet generators operating under heavy load conditions.

FIGURE 2 is a partial view of a permanent magnet generator stator incorporating the principles of this invention.

FIGURE 3 illustrates the effect of generator temperature on the short circuit current output of a prior art permanent magnet generator and a permanent magnet generator incorporating the principles of this invention.

FIGURE 4 illustrates actual comparative data between a prior art permanent magnet generator and a permanent magnet generator incorporating the principles of this invention.

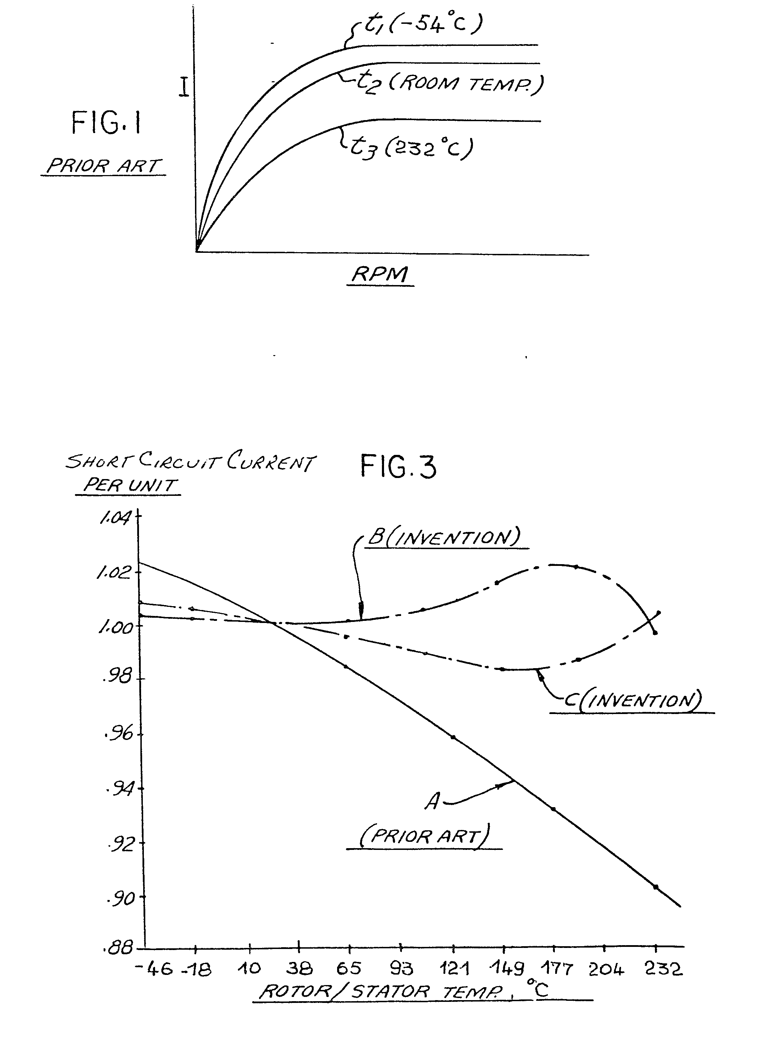

Referring now to the drawings, FIGURE 1 illustrates the effect that temperature would have on the current output of a prior art permanent magnet generator operating under heavy current load. This graph illustrates that for a permanent magnet generator not incorporating the principles of this invention the current output of the generator will vary significantly as a function of generator temperature. This is because as the temperature rises the magnetic flux between the rotor and stator (air gap flux) decreases.

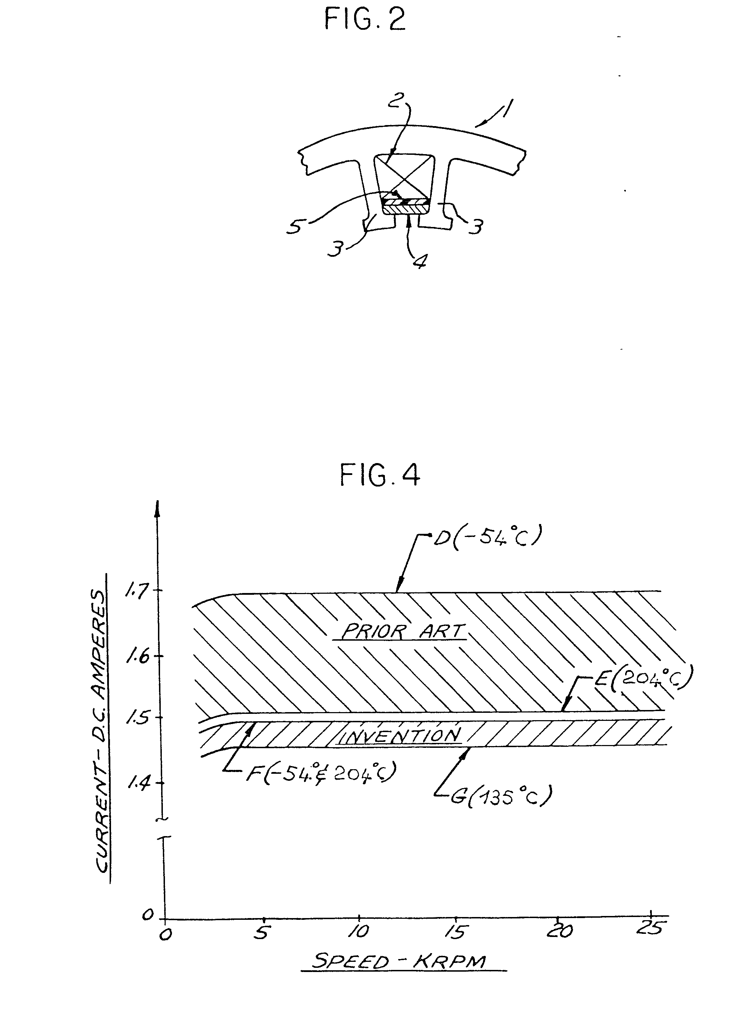

FIGURE 2 illustrates a portion of a permanent magnet generator incorporating the principles of this invention. Only the stator of the permanent magnet generator is illustrated. A detailed description of the components of a permanent magnet generator may be found in U.S. Patents 4,025,840 and 3,531,670.

For purposes of simplicity, the conductors of a winding 2 are shown in diagrammatic form. It is to be understood that there would be similar conductor windings between other teeth 3 of the stator. Also located between adjacent teeth 3 is a temperature compensation strip 4 which is electrically insulated from the conductor windings by a piece of electrically insulating material 5. The insulating wedge 5 is comprised of a nonmagnetic material and may be made of any suitable electrically nonconducting material capable of withstanding high temperatures. For example, a glass laminate may be used.

The composition of the temperature compensation strip 4 is preferably a nickel iron alloy. Especially useful in some applications is a nickel iron alloy having a nickel content of about 29.25% to 39%. In one application a nickel iron alloy having a nickel composition of 36% was found suitable for achieving the objects of the invention. A nickel iron alloy having this percent nickel content is called temperature compensator alloy "36", also known as INVAR "36" (annealed), which is available from Carpenter Technology. Other Carpenter alloys which may be used are Carpenter temperature compensator "32" and "30". These particular materials have Curie temperatures in a range of 150°C to 315°C. Because of this the material is highly magnetic at room temperature but as temperature rises the alloy becomes less and less magnetic until at the material's Curie temperature it becomes nonmagnetic. The overall result is that as temperature increases the inductive reactance of the coil will decrease. It should be noted at this point that none of the permanent magnet generators in the prior art were designed to include magnetic strips which became nonmagnetic above a predetermined operating temperature of the generator or decreased in permeability as temperature increased.

The nickel iron alloys accomplish the objects of this invention because their permeability drops to about one at temperatures between 150°C to 315°C. For instance, at room temperature and in a magnetic field of 46 Oersteds and above, the permeability of Carpenter alloy "32" is about 180 and alloy "30" (type 2) is about 60. However, at a temperature above 200°C the permeability of alloy "32" goes to one and at a temperature above 150°C the permeability of Carpenter alloy "30" (type 2) goes to one. Similarly, in a magnetic field of 5 Oersteds Carpenter temperature compensator "36" alloy has a permeability of about 1650 at room temperature. At a temperature of about 280°C the permeability drops to about one.

A permanent magnet generator's total reactance consists of its armature leakage reactance and its armature reaction reactance. The armature leakage reactance is a function of the permeability of the medium (air or material) which occupies the space between stator slots. Therefore, the addition of a temperature compensator material 4 between the teeth 3 will affect this reactance. At room temperature the permeability of the temperature compensating strip is high. During operation, the temperature of the temperature compensating strip 4 increases and its permeability decreases. This results in a gradual decrease in the armature leakage reactance as the temperature of the generator increases. When the Curie temperature of the temperature compensating strip 4 is chosen to be about equal to the maximum operating temperature of the permanent magnet generator, the temperature compensating strips 4 will have a permeability of about 1 at the maximum operating temperature of the generator. As a result, at maximum operating temperature, the permanent magnet generator's armature leakage reactance decreases to a value it would have been without the strips. This results in no appreciable reduction in the generator's output current capacity at maximum temperature.

By proper selection of the thickness and number of temperature compensating strips 4 employed in the stator its inductive reactance can be decreased with increasing temperature to offset the effect that generator temperature would ordinarily have on the short circuit current.

For an uncompensated permanent magnet generator both the no-load voltage and the short circuit current decrease with increasing temperature. In a compensated machine, the no-load voltage still decreases with increasing temperature but the short circuit current stays relatively constant. In the uncompensated generator, the short circuit current decreased because of the decrease in no-load voltage. In the compensating generator we have caused the reactance of the machine to also decrease with increasing temperature and therefore the short circuit current, which approximates the no-load voltage divided by the reactance of the machine, stays nearly constant.

The subject invention has been incorporated into a permanent magnet generator having a 12 pole samarium cobalt magnet rotor and an 18-slot stator with two 3-phase windings, each occupying 9 slots. With no temperature compensating strips in the stator slots, the no-load voltage, and therefore the short circuit current, also varied from room temperature values as follows: 102.5% at -48°C and 90% at 232°C. All measurements were taken at 15,000 RPM.

Each stator winding was then compensated by means of the temperature compensating strips 4 which were inserted in the stator slots. One winding was compensated with Carpenter Technology's temperature compensator alloy "32" Type 1 (three 75/100 mm thick strips each placed one slot apart to cause an equal effect on all three phases) and another winding with Carpenter's temperature compensator "36" (three 50/100 mm thick strips also each one slot apart).

FIGURE 3 illustrates a graph of the data taken for this permanent magnet generator with and without temperature compensation. Curve A illustrates the short circuit current from a winding without temperature compensation in terms of percent of variation of the short circuit current from that current established at room temperature. Curve A illustrates the wide variation in short circuit current over the operating temperature range of the uncompensated permanent magnet generator for a fixed speed of 15,000 RPM. Curve B illustrates the short circuit current from the winding with the temperature compensating strip made from Carpenter's "32" material and Curve C illustrates the short circuit current from the winding with the Carpenter Temperature Compensator "36" material. It is readily apparent from these curves that the nickel iron alloy strips 4 between the teeth 3 of the stator 1 have significantly reduced the effect of temperature on the short circuit current of the permanent magnet generator over a wide range of operating temperatures.

It should be understood that the same results could have been obtained by using temperature compensating strips 4 that have a thickness less than 50/100 mm so long as additional strips were used in additional slots. For example, strips only one-third as thick could have been used with a strip in every slot instead of one strip in every third slot. Further, it is also possible to combine two or more types of temperature compensating materials. For example, two nickel iron alloys, each having a different Curie temperature. Such an arrangement could produce a curve not shown which is a composite of Curves B and C in FIGURE 3, i.e. an even flatter short circuit current versus temperature characteristic.

The different shape of Curve B and Curve C, because of different nickel iron alloys, illustrates that the alloy composition can be tailor-made to obtain a curve having a desired shape.

FIGURE 4 is a graph of speed versus current for a prior art permanent magnet generator and a permanent magnet generator incorporating the principles of this invention, both operating under heavy current load. This graph illustrates the large variation in output current with temperature for a prior art permanent magnet generator when compared to a permanent magnet generator incorporating the principles of this invention. Curve D is the output current at -54°C and Curve E is the output current at 204°C from a prior art permanent magnet generator. The distance between the two curves represents the variation in output current of the generator due to temperature for an uncompensated winding.

Curve F represents the maximum output current, which occurs at -54°C and also at 204°C, from a permanent magnet generator having a temperature compensated winding. Curve G represents the minimum output current, which occurs at 135°C, from the permanent magnet generator having a temperature compensated winding. The distance between Curves F and G is the total variation of output current over a range of temperatures from -54°C to 204°C.

This graph illustrates that the variation in output current from an uncompensated permanent magnet generator is about 4.5 times greater than a permanent magnet generator having a compensated winding over a temperature range from -54°C to 204°C. The permanent magnet generator which was temperature compensated was the same generator previously referred to except for the fact that only Temperature Compensator "36" nickel iron alloy was used as the material for the strips 4. Combinations of the nickel iron alloys could have been used to obtain a curve that further minimized current variations over the same temperature range. When using only the Temperature Compensator "36" material the minimum current occurred at 135°C wherein with the prior art generator the minimum current occurred at 204°C.

Claims:

1. Permanent magnet generator of the type having a permanent magnet rotor, a stator (1) having a plurality of teeth (3) and slots between adjacent teeth , and at least one winding (2) having electrical conductors passing through slots, characterized in that there is provided means (4) for reducing the reactance of said winding (2) as temperature increases over the operating temperature range of the generator.

2. Permanent magnet generator as claimed in Claim 1, characterized in that the means (4) for reducing the reactance comprises a strip of metal (4) comprised of a nickel iron alloy positioned between said conductors and rotor and between two adjacent stator teeth (3) and electrically insulated from said conductors.

3. Permanent magnet generator as claimed in Claim 2, characterized in that the nickel iron alloy has a nickel content of 29.5% to 39%.

4. Permanent magnet generator as claimed in Claim 2, characterized in that the nickel iron alloy has a nickel content of about 36%.

5. Permanent magnet generator as claimed in Claim 2, characterized in that the nickel iron alloy has a Curie temperature in the range of 150°C to 315°C and, thus, a permeability of about 1 for said Curie temperature range.

6. Permanent magnet generator as claimed in Claim 2, characterized in that the thickness of the nickel iron alloy strip is about of 50/100 mm.

7. Permanent magnet generator as claimed in Claim 2, characterized in that there are provided a plurality of strips each positioned in a different slot.

FIG·1

PRIOR ART

$t_1$ (-54°C )

$t_2$ (ROOM TEMP.)

$t_3$ (232°C)

I

RPM

SHORT CIRCUIT CURRENT PER UNIT

FIG.3

B (INVENTION)

C (INVENTION)

A

(PRIOR ART)

ROTOR / STATOR TEMP. , °C

## FIG. 2

## FIG. 4

0022379

Application number

EP 80 40 0571

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | DE - B - 1 064 620 (KAIK) <br><br> * Column 2, lines 31-54 * | 1-3 |
| | GB - A - 624 541 (FROST) <br><br> * Page 4, line 124 - page 5, line 2 * | 1,2,7 |
| | GB - A - 626 439 (FROST) <br><br> * Page 4, lines 51-59 * | 1,2,7 |
| A | FR - A - 318 597 (STE. ALSACIENNE) | |
| D/A | US - A - 4 025 840 (BRISSEY) | |
| D/A | US - A - 2 640 956 (BUCHANAN) | |

### CLASSIFICATION OF THE APPLICATION (Int. Cl. 3)

H.02 K 3/493
21/12

### TECHNICAL FIELDS SEARCHED (Int.Cl. 3)

H 02 K 3/493
21/12
21/14
21/16

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-09-1980 | RANDES |

EPO Form 1503.1 06.78